# EUROPEAN PATENT SPECIFICATION

(11) **EP 2 644 415 B1**
(45) Date of publication and mention of the grant of the patent: **21.11.2018**
(21) Application number: 13157551.6
(22) Date of filing: 04.03.2013
(51) Int. Cl.: B60G 3/20, B60K 7/00

(54) **Electric vehicle**
Elektrisches Fahrzeug
Véhicule électrique

(30) Priority: 30.03.2012 JP 2012080980
(43) Date of publication of application: 02.10.2013
(73) Proprietor: Honda Motor Co., Ltd., Tokyo 107-8556 (JP)
(72) Inventor: Odajima, Masaru, Wako-shi, Saitama 351-0193 (JP); Kawasaki, Yohei, Wako-shi, Saitama 351-0193 (JP)
(74) Representative: Dehns

(56) References cited:
- EP-A1- 1 950 072
- JP-A- 2004 090 822
- JP-A- 2005 126 037
- JP-A- 2008 168 804
- US-A- 5 820 150
- US-A1- 2004 112 657
- US-A1- 2007 209 852

## Description

The present invention relates to an electric vehicle in which left and right drive wheels are driven respectively by electric drive units.

Electric vehicles which can achieve energy saving and reduction in environmental load are attracting attention and are being put to practical use. As a result of improvements in performances of electric motors, there has been proposed a drive method in which one electric motor drives one drive wheel; see Japanese Patent Application Publication No. 2005-126037, and in particular Fig. 1, for example. Other examples are shown in JP 2004-090822 and JP 2008-168804. Hybrid vehicles, which use a combination of a normal engine and electric motors are also known; see, for example, EP 1950072.

Note that an electric motor, a hydraulic motor, and a pneumatic motor are collectively referred to as "motors". When it is necessary to specify the type of the motor, the term "electric motor" is used.

As shown in Fig. 1 of Patent Document 1, a knuckle (180) is disposed on a laterally inner side of an electrically-driven wheel (100), a motor (70) is disposed on a laterally inner side of the knuckle (180), and a shock absorber (230) is disposed on a laterally inner side of the motor (70). (The numbers in parentheses indicate reference numerals used in Japanese Patent Application Publication No. 2005-126037.)

Recently, there is a demand for increase in drive power, and so the motor tends to be increased in size. When the size of the motor is increased, a portion of the motor protruding laterally inwardly from a recessed portion of the electrically-driven wheel becomes larger relative to the portion of the motor housed in the recessed portion. Moreover, a structure in which the motor and a reducer are integrated with each other has been proposed.

When the structure of Japanese Patent Application Publication No. 2005-126037 is applied to a small vehicle (such as a compact car) whose vehicle width is limited, designing of a vehicle becomes difficult because the motor protrudes laterally inwardly some way.

In other words, it is desirable to reduce the size of a drive system including the motor in order to improve freedom in vehicle design.

Moreover, it is also desirable that a lateral dimension from the electrically-driven wheel to the shock absorber is small in a general passenger vehicle. This is because a space is then secured between the left and right shock absorbers, and a vehicle body frame and various instruments can be disposed in this space.

In other words, there is a demand for a structure in which a lateral dimension can be reduced, even when a motor including a reducer is increased in size and protrudes from a recessed portion of a drive wheel.

It is an object of at least the preferred embodiment of the present invention to provide a structure in which a lateral dimension can be suppressed even when an electric motor including a reducer largely protrudes from a recessed portion of a drive wheel.

According to a first aspect of the invention, there is provided an electric vehicle with left and right drive wheels, each drive wheel having a tyre, in which a brake device is provided in a recessed portion of a wheel of each of the drive wheels and the wheel of each of the drive wheels is driven by a drive unit, wherein a vertically-swingable upper arm and a vertically-swingable lower arm extend from a vehicle body frame of the electric vehicle in a lateral direction of the vehicle, a knuckle is connected to a distal end of the upper arm and a distal end of the lower arm, the wheel is rotatably supported by the knuckle, the drive unit is connected to the side of the knuckle nearer the lateral centre of the vehicle, and a shock absorber extends between the vehicle body frame and the lower arm, the drive unit is a unit in which an electric motor and a reducer are integrated, an upper arm portion extends obliquely upward toward a rear of the vehicle from the knuckle between the wheel and the drive unit to a position where the upper arm portion does not overlap the drive unit in a side view of the vehicle, the upper arm is connected to an upper end of the upper arm portion, and the shock absorber is disposed to the rear of the upper arm, and the shock absorber is thereby disposed to overlap the drive unit in a front view of the vehicle; wherein the electric motor is located laterally to one side of the tyre, and the drive unit is located above the centre of rotation of the wheel and is disposed inside an outer diameter circle of the tyre such that the drive unit cannot be seen in a side view of the vehicle.

Since the shock absorber is disposed to overlap the drive unit in the front view of the vehicle, a lateral dimension can be made smaller than in the case where the shock absorber is disposed laterally inward of the drive unit.

In other words, the invention provides a structure in which a lateral dimension can be suppressed even when the electric motor including the reducer largely protrudes from the recessed portion of the drive wheel.

Preferably, a line extending upward from a rotation centre of the wheel in the side view of the vehicle and the electric motor are disposed in such a way that a motor shaft of the electric motor overlaps the line.

Extending the electric motor upward allows the electric motor to be increased in size while avoiding interference with the shock absorber.

Preferably, the drive unit is formed by attaching the electric motor to one surface of a centre case and by attaching the reducer to another surface of the centre case; and in the side view of the vehicle, an upper half of a motor case has a semicircle shape and at least part of a joint portion where the distal end of the upper arm is connected to the upper arm portion is disposed in an almost-triangular space surrounded by the semicircle, a horizontal line passing through the uppermost point of the semicircle, and a vertical line passing through the rearmost point of the semicircle.

Disposing the joint portion in the almost-triangular space formed in a corner above the semicircle shape allows the joint portion to be disposed close to the motor case while avoiding interference with the motor case.

In a further preferred form, in the front view of the vehicle, the reducer is disposed on a side closer to the wheel, the electric motor is disposed on a side closer to the centre of the vehicle, the motor shaft is rotatably supported at one end by the motor case, and is rotatably supported at another end by a reducer case; and a bearing supporting portion supporting the other end of the motor shaft is provided in the reducer case and protrudes into the recessed portion of the wheel while extending at a lateral side of the knuckle.

The reducer case which is part of the drive unit is thus partially housed in the recessed portion of the wheel. Accordingly, the drive unit can be disposed closer to the drive wheel by an amount corresponding to the housed portion. Particularly, the lateral width of the vehicle body frame can be secured even in a vehicle having a small width.

In other words, it is possible to dispose part of the drive unit in the wheel and thereby suppress the protruding of the drive unit to a small degree.

Preferably, the drive unit is disposed within an outer diameter circle of the tyre of each of the drive wheels in the side view of the vehicle.

As a result, the drive unit cannot be seen in the side view of the vehicle, and so appearance is improved. Moreover, since the tyre serves to protect the drive unit, a protection cover of the drive unit can be omitted.

Preferably, the upper arm portion, a lower joint portion connecting the lower arm to the knuckle, and a shock absorber connection portion connecting the shock absorber to the lower arm are disposed within an outer diameter circle of the tyre in the side view of the vehicle.

The upper arm portion, the lower joint portions, and the shock absorber connection portion are thus protected by the tyre.

In a further preferred form, the upper arm is a V-shaped member having an intermediate portion protruding upward, and a vehicle body frame side connection portion of the upper arm is lower than the joint portion.

Forming the upper arm in a so-called "inverted-V shape" in this way allows the upper arm to avoid the motor case.

A preferred embodiment of the present invention will now be described by way of example only and with reference to the accompanying drawings, in which:
Fig. 1 is a perspective view of an embodiment of an electric vehicle according to the present invention;
Fig. 2 is a rear view of the electric vehicle;
Fig. 3 is an enlarged view of a portion of Fig. 2;
Fig. 4 is an exploded view around a rear wheel;
Fig. 5 is a cross-sectional view of the rear wheel and a drive unit; and
Fig. 6 is a left side view of a suspension device.

A presently preferred embodiment of the electric vehicle of the present invention is described below with regard to the accompanying drawings. The drawings should be viewed in an orientation in which the reference numerals can be read properly. Moreover, terms such as "front", "rear", "left", and "right" are to be understood as perceived by a driver of the vehicle.

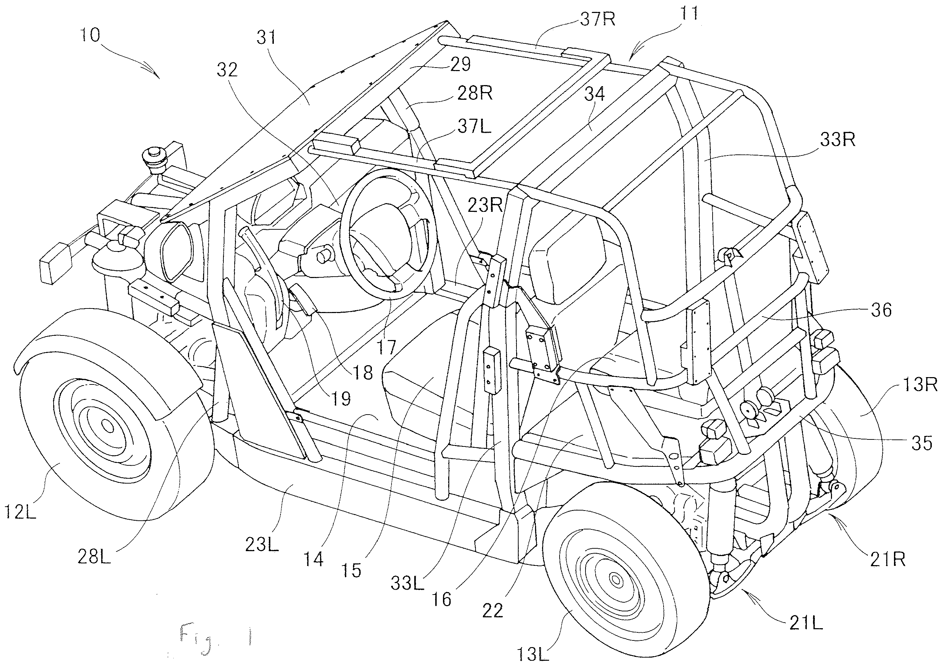

As shown in Fig. 1, an electric vehicle 10 is a narrow vehicle comprising a vehicle body frame 11 provided with a front wheel 12L (here and in the following, L is a suffix indicating left) and rear wheels 13L, 13R (here and in the following, R is a suffix indicating right). A driver seat 15 is provided on a floor 14. A passenger seat 16 is provided behind the driver seat 15. A steering wheel 17, a brake pedal 18, and a parking brake lever 19 are provided in front of the driver seat 15. Although not illustrated in Fig. 1, the vehicle 10 has a right front wheel. In other words, the electric vehicle 10 is a narrow four-wheeled vehicle.

The passenger seat 16 is disposed between the left and right rear wheels 13L, 13R and above and between suspension devices 21L, 21R. The passenger seat 16 may be replaced with a rear cargo bed. Alternatively, the passenger seat 16 may be detachably attached onto a rear cargo bed 22.

The vehicle body frame 11 has, as main elements, left and right side sills 23L, 23R as well as a front cross frame 24, a front subframe 25 extending toward the front of the vehicle from the front cross frame 24, a rear cross frame 26, and a rear portion subframe 27 extending toward the rear of the vehicle from the rear cross frame 26; these are shown in more detail in Fig. 10.

Furthermore, as shown in Fig. 1, front upper frames 28L, 28R extend upward respectively from front end portions of the side sills 23L, 23R, and a cross sub-member 29 extends between upper ends of the front upper frames 28L, 28R. A front shield 31 is attached to the front upper frames 28L, 28R and the cross sub-member 29 from the front.

An instrument panel 32 is located between the left and right front upper frames 28L, 28R. The steering wheel 17 is disposed slightly to the left of the lateral centre of the instrument panel 32, and the parking brake lever 19 is disposed to the left of the steering wheel 17.

Rear upper frames 33L, 33R extend upward respectively from rear end portions of the side sills 23L, 23R, and a cross sub-member 34 extends between upper ends of the rear upper frames 33L, 33R. Furthermore, a square-U-shaped rear subframe 35 extends from the rear upper frames 33L, 33R at a position above the rear wheels 13L, 13R to surround the passenger seat 16 from left, right, and rear. A cage-shaped cage frame 36 extends from the rear upper frames 33L, 33R and the cross sub-member 34 to surround the passenger seat 16 at a position above the rear subframe 35. Longitudinal members 37L, 37R extend between the front cross sub-member 29 and the rear cross sub-member 34, and a vehicle cabin is thus formed.

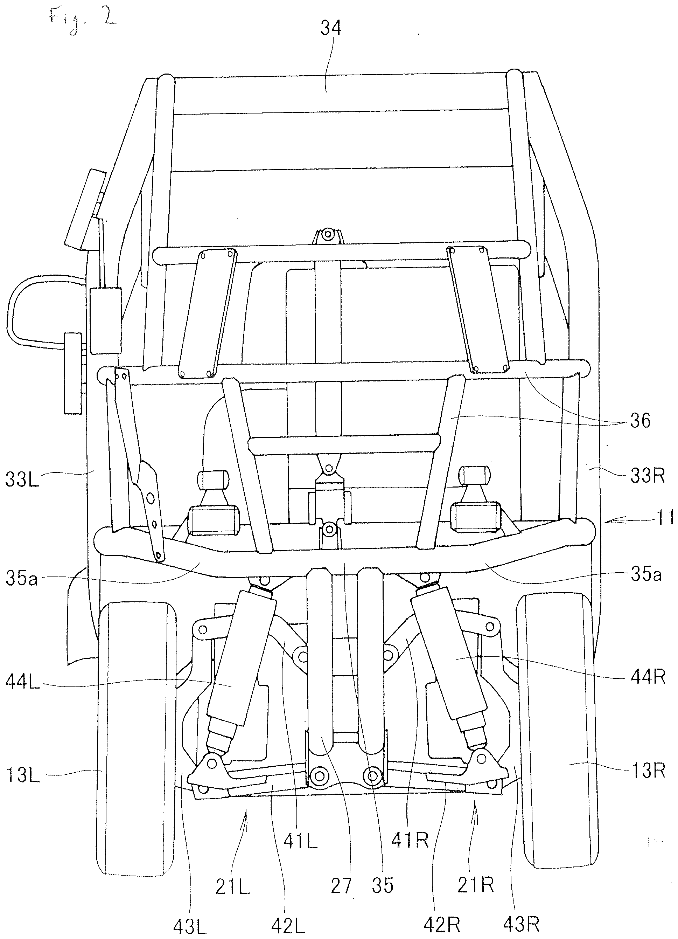

As shown in Fig. 2, the rear wheels 13L, 13R (which are left and right drive wheels) are supported by the suspension devices 21L, 21R so as to be vertically swingable on the vehicle body frame 11. The rear wheels 13L, 13R are each inclined in such a way that an upper end thereof is closer to the lateral centre of the vehicle than a lower end thereof is.

The rear subframe 35 which extends in the lateral direction of the vehicle is bent upward at regions over the rear wheels 13L, 13R. Providing bent portions 35a, 35b can ensure sufficient spaces to accommodate upward swinging movement of the rear wheels 13L, 13R.

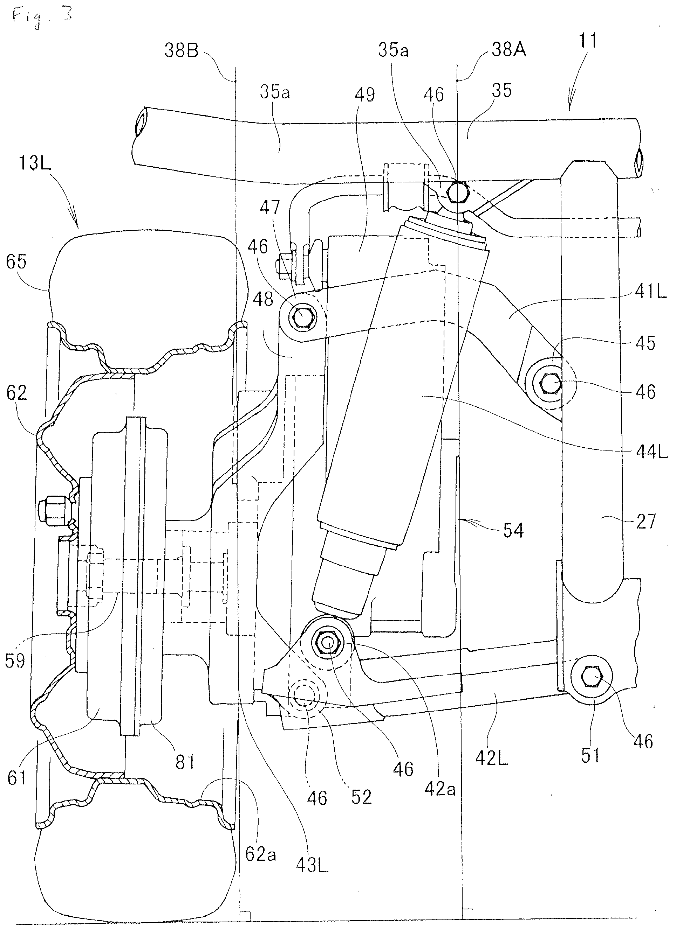

The left suspension device 21L shown in Fig. 3 includes an upper arm 41L and a lower arm 42L which extend laterally leftwards from the vehicle body frame 11, a knuckle 43L which is connected to distal ends of the arms 41L, 42L, and a rear shock absorber 44L which extends between the end of the lower arm 42L and the vehicle body frame 11 and buffers vertical movement of the rear wheel 13L.

The right suspension device 21R is identical, except that the suffixes of the reference numerals are changed from L to R, and so detailed description of the right suspension device 21R is omitted.

As shown in Fig. 3, the upper arm 41L is connected to the vehicle body frame 11 (specifically, the rear portion subframe 27) at a vehicle body frame side connection portion 45 with a connector 46. In a preferred form, the connector 46 is a bolt formed by providing a bolt head and a female screw on a pin extending in a near-far direction of the drawing (perpendicular to the plane of the drawing).

The distal end of the upper arm 41L is connected to an upper arm portion 48 of the knuckle 43L at a joint portion 47 with a connector 46.

The upper arm 41L is a V-shaped member having an intermediate portion (the central portion in the lateral direction of the vehicle) protruding upward. The vehicle body frame side connection portion 45 is positioned lower than the joint portion 47.

A motor case 49 is disposed on the far side of the upper arm 41L in the drawing (so that it is located further forward than the upper arm 41L with respect to the vehicle). Forming the upper arm 41L in a so-called "inverted-V shape" allows the upper arm 41L to avoid the motor case 49.

The lower arm 42L is also connected to a lower portion of the vehicle body frame 11 (specifically, the rear portion subframe 27) at a lower vehicle body frame side connection portion 51 with a connector 46, and is connected to a lower portion of the knuckle 43L at a lower joint portion 52 with a connector 46.

The rear shock absorber 44L is disposed so as to extend in an oblique vertical direction. An upper portion of the rear shock absorber 44L is connected to the vehicle body frame 11 (specifically, an upper shock absorber connection portion 35a provided in the rear subframe 35) with a connector 46, while the lower portion thereof is connected to the lower arm 42L at a lower shock absorber connection portion 42a with a connector 46.

Assume that an inner perpendicular line 38A passing through a point of a drive unit 54 which is closest to the lateral centre is drawn, and that an outer perpendicular line 38B passing through a laterally outermost point of the drive unit 54 is also drawn. The upper shock absorber connection portion 35a and the lower shock absorber connection portion 42a are each disposed between the inner perpendicular line 38A and the outer perpendicular line 38B, or on one of the inner perpendicular line 38A and the outer perpendicular line 38B.

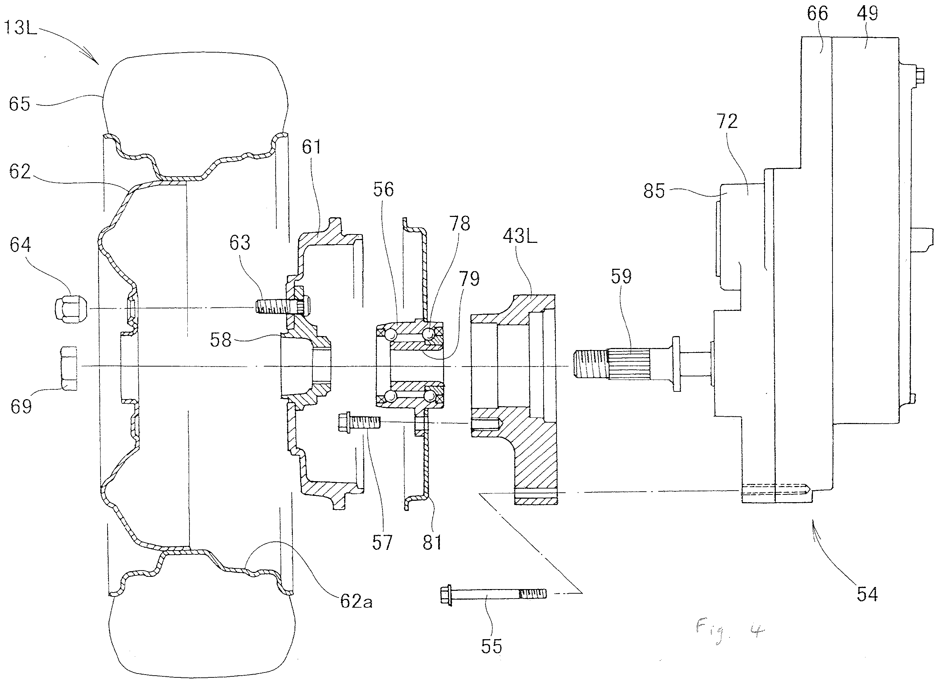

The rear wheel 13L and a drive unit 54 are attached to the knuckle 43L in such a way that the knuckle 43L is interposed between the rear wheel 13L and the drive unit 54 (as will be described in detail with reference to Fig. 4). The drive unit 54 serves the role of driving the rear wheel 13L.

It is a structural characteristic that the drive unit 54 and the rear shock absorber 44L overlap each other in a rear view (and also in a front view). Since the rear shock absorber 44L is arranged to overlap the drive unit 54 in this way, the lateral dimension can be made smaller than in the case where the shock absorber 44L is disposed laterally inward of the drive unit 54.

As shown in Fig. 4, the drive unit 54 is fixed to the surface of the knuckle 43L nearer to the lateral centre of the vehicle body with a bolt 55. Moreover, a bearing case 56 is fixed to the surface of the knuckle 43L on the lateral outer side relative to the vehicle (the side nearer to wheel 62) with a bolt 57. A wheel supporting member 58 is disposed on the lateral outer side of the bearing case 56. The wheel supporting member 58 is spline-coupled to an output shaft 59 extending from the drive unit 54 and is caused to rotate by rotation of the output shaft 59.

A brake drum 61 and a wheel 62 of the rear wheel 13L are fastened together to the wheel supporting member 58 with a bolt 63 and a nut 64. The rear wheel 13L and the drive unit 54 are thus attached to the knuckle 43L.

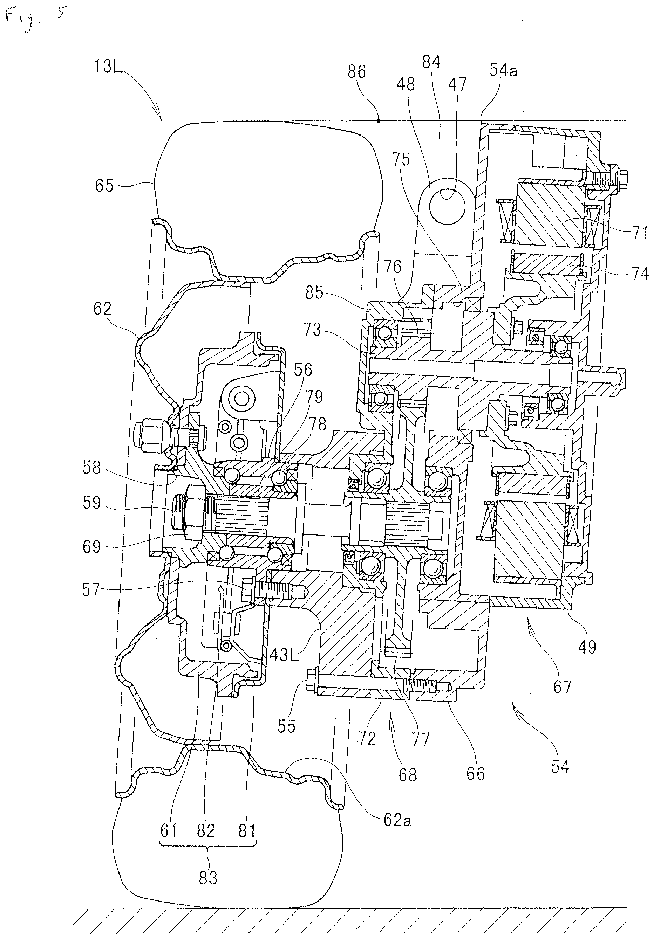

The attached form of the wheel is described in detail with regard to Fig. 5.

As shown in Fig. 5, the rear wheel 13L includes the wheel 62 which has a bowl-shaped recessed portion 62a and a tyre 65 which is mounted on the wheel 62.

The drive unit 54 is formed by attaching an electric motor 67 to one surface of a centre case 66 and by attaching a reducer 68 to the other surface of the centre case 66.

The electric motor 67 includes a bottomed-tube-shaped motor case 49 fastened to the centre case 66, a stator 71 attached to the motor case 49, a motor shaft 73 rotatably supported at one end by the motor case 49 and rotatably supported at the other end by a reducer case 72, and a rotor 74 attached to the motor shaft 73 and surrounded by the stator 71.

The centre case 66 is a vertically elongate member and has a through hole 75 through which the motor shaft 73 passes.

The reducer 68 includes the bottomed-tube-shaped reducer case 72 fastened to the centre case 66, a small-diameter drive gear 76 provided at a laterally outer end of the motor shaft 73 and housed in the reducer case 72, a large-diameter driven gear 77 rotated by the drive gear 76 directly or via an intermediate gear and housed in the reducer case 72, and the output shaft 59 which is rotated by the driven gear 77 and is configured to rotate the wheel 62.

An inner race 79 is provided inside the bearing case 56, with rolling elements 78 provided between the inner race 79 and the bearing case 56, and the output shaft 59 is spline-coupled to the inner race 79. Specifically, a laterally outer end of the output shaft 59 is rotatably supported by the bearing case 56, and radial displacement (deflection) is thereby prevented.

Further, the wheel supporting member 58 is fixed to the front end of the output shaft 59 with a nut 69. The wheel 62 is thereby caused to rotate by rotation of the output shaft 59. An upward load acting on the rear wheel 13L is transmitted to the wheel supporting member 58, the output shaft 59, and the inner race 79 in this order. Since the wheel supporting member 58 and the inner race 79 are in contact with each other in an axial direction and a protruding length of the output shaft 59 from the inner race 79 is short, the upward load acting on the rear wheel 13L is supported by the inner race 79 and is then supported by the knuckle 43L via the bearing case 56.

Since almost no bending moment acts on the output shaft 59, the output shaft 59 can be designed exclusively for rotary power transmission. Accordingly, the diameter of the output shaft 59 can be reduced.

A brake base plate 81 is fixed to an outer periphery of the bearing case 56. Brake shoes and a shoe expanding part 82 are attached to the brake base plate 81.

The brake drum 61 is fixed to the wheel supporting member 58. Braking of the rear wheel 13L can be performed by causing the brake shoes to slide in contact with an inner peripheral surface of the brake drum 61.

A brake device 83 including the brake drum 61, the brake base plate 81, the brake shoes, and the shoe expanding part 82 which are described above is provided in the recessed portion 62a of the wheel 62.

Moreover, in a rear view of the vehicle (and also in a front view), there is formed a rectangular space 84 surrounded from three sides by the tyre 65, the reducer case 72, and the centre case 66. The joint portion 47 for connecting the upper arm portion 48 and the upper arm 41L to each other is disposed in the rectangular space 84.

Since the joint portion 47 is disposed in the rectangular space 84, connection work and separation work of the joint portion 47 can be performed easily using the rectangular space 84 as a work space. Accordingly, the work time can be reduced.

Moreover, a bearing supporting portion 85 supporting the outer end of the motor shaft 73 is provided in the reducer case 72. The bearing supporting portion 85 protrudes into the recessed portion 62a while extending at a lateral side of the knuckle 43L.

In other words, the reducer case 72 (which is part of the drive unit 54) is partially housed in the recessed portion 62a of the wheel 62. The drive unit 54 can thus be located closer to the rear wheel (drive wheel) 13L by an amount corresponding to the housed portion. Accordingly, it is possible to dispose part of the drive unit 54 inside the wheel 62 and thereby suppress protrusion of the drive unit 54 to a small degree.

As described in Fig. 2, the rear wheels 13L, 13R are each inclined in such a way that the upper end thereof is located closer to the lateral centre of the vehicle. Accordingly, as shown in Fig. 5, an uppermost point 54a of the drive unit 54 is below a horizontal line 86 passing through an uppermost point of the tyre 65.

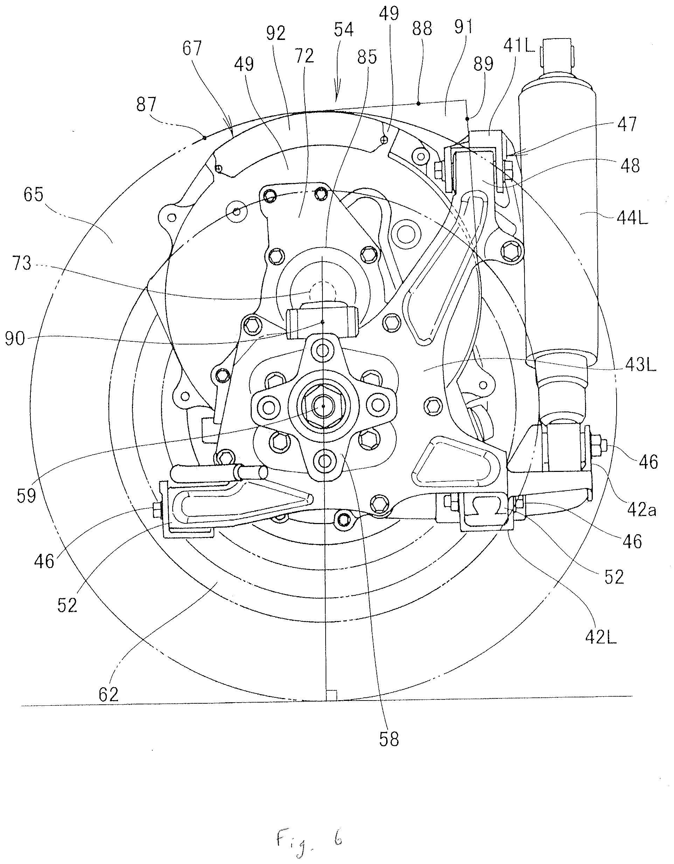

As shown in Fig. 6, the drive unit 54 is therefore disposed inside an outer diameter circle 87 of the tyre 65, which is shown by a dotted line. As a result, the drive unit 54 cannot be seen in a side view of the vehicle, and so the appearance of the vehicle is improved. Moreover, since the tyre 65 serves as to protect the drive unit 54, a protection cover for the drive unit 54 can be omitted.

Furthermore, as shown in Fig. 6, the upper arm portion 48, lower joint portions 52, 52 connecting the lower arm 42L to the knuckle 43L, and the shock absorber connection portion 42a connecting the shock absorber 44L to the lower arm 42L are all disposed inside the outer diameter circle 87 of the tire 65 in a side view of the vehicle.

The upper arm portion 48, the lower joint portions 52, 52, and the shock absorber connection portion 42a are thus protected by the tire 65.

Furthermore, as shown in Fig. 6, the electric motor 67 is disposed in such a way that a perpendicular line 90 extending upward from the point of contact between the tyre 65 and the ground and passing through the rotation centre of the wheel 62 (the centre of the output shaft 59) extends upward to overlap the motor shaft 73.

The upper arm portion 48 extends obliquely upward toward the rear of the vehicle from the knuckle 43L to a position where the upper arm portion 48 does not overlap the drive unit 54, and the upper arm 41L is connected to the upper end of the upper arm portion 48. This arrangement of the upper arm portion 48 eliminates the interference of the drive unit 54 with the upper arm 41L. As a result, the electric motor 67 can extend upward. Even when the electric motor 67 is too large to be disposed in the recessed portion 62a of the wheel 62, the electric motor 67 can be easily disposed behind the rear wheel 13L while avoiding interference with the upper arm portion 48 and the upper arm 41.

Moreover, as shown in Fig. 6, in the side view of the vehicle, an upper half of the motor case 49 has a semicircle shape, and at least part of the joint portion 47 is disposed in an almost-triangular space 91 surrounded by the semicircle (motor case 49), a horizontal line 88 passing through the uppermost point of the semicircle (motor case 49), and a vertical line 89 passing through the rearmost point of the semicircle (motor case 49).

By disposing the joint portion 47 in the almost-triangular space 91 formed in a corner above the semicircle shape, the joint portion 47 can be located close to the motor case 49 while avoiding interference with the motor case 49.

In the described embodiment, the rear wheels are the drive wheels; however, the front wheels may be the drive wheels.

The present invention is preferably applied to a narrow four-wheel vehicle in which a driver seat and a passenger seat are arranged one behind the other.

## Claims

1. An electric vehicle (10) with left and right drive wheels (13L, 13R), each drive wheel having a tyre (65), in which a brake device (83) is provided in a recessed portion (62a) of a wheel (62) of each of the drive wheels (13L, 13R) and the wheel (62) of each of the drive wheels (13L, 13R) is driven by a drive unit (54), wherein
a vertically-swingable upper arm (41L, 41R) and a vertically-swingable lower arm (42L, 42R) extend from a vehicle body frame (11) of the electric vehicle (10) in a lateral direction of the vehicle, a knuckle (43L, 43R) is connected to a distal end of the upper arm (41L, 41R) and a distal end of the lower arm (42L, 42R), the wheel (62) is rotatably supported by the knuckle (43L, 43R), the drive unit (54) is connected to the side of the knuckle (43L, 43R) nearer the lateral centre of the vehicle, and a shock absorber (44L, 44R) extends between the vehicle body frame (11) and the lower arm (42L, 42R),
the drive unit (54) is a unit in which an electric motor (67) and a reducer (68) are integrated,
an upper arm portion (48) extends obliquely upward toward a rear of the vehicle from the knuckle (43L, 43R) between the wheel (62) and the drive unit (54) to a position where the upper arm portion (48) does not overlap the drive unit (54) in a side view of the vehicle, the upper arm (41L, 41R) is connected to an upper end of the upper arm portion (48), and the shock absorber (44L, 44R) is disposed to the rear of the upper arm (41L, 41R), and
the shock absorber (44L, 44R) is thereby disposed to overlap the drive unit (54) in a front view of the vehicle;
wherein the electric motor (67) is located laterally to one side of the tyre (65), and the drive unit (54) is located above the centre of rotation of the wheel (62) and is disposed inside an outer diameter circle (87) of the tyre (65) such that the drive unit (54) cannot be seen in a side view of the vehicle (10).

2. The electric vehicle according to claim 1, wherein a line (90) extending upward from a rotation centre of the wheel (62) in the side view of the vehicle and the electric motor (67) are disposed in such a way that a motor shaft (73) of the electric motor (67) overlaps the line (90).

3. The electric vehicle according to claim 1 or claim 2, wherein
the drive unit (54) is formed by attaching the electric motor (67) to one surface of a centre case (66) and by attaching the reducer (68) to another surface of the centre case (66), and
in the side view of the vehicle, an upper half of a motor case (49) has a semicircle shape and at least part of a joint portion (47) where the distal end of the upper arm (41L, 41R) is connected to the upper arm portion (48) is disposed in an almost-triangular space (91) surrounded by the semicircle, a horizontal line (88) passing through the uppermost point of the semicircle, and a vertical line (89) passing through the rearmost point of the semicircle.

4. The electric vehicle according to claim 3, wherein,
in the front view of the vehicle, the reducer (68) is disposed on a side closer to the wheel (62), the electric motor (67) is disposed on a side closer to the centre of the vehicle, the motor shaft (73) is rotatably supported at one end by the motor case (49), and is rotatably supported at another end by a reducer case (72), and
a bearing supporting portion (85) supporting the other end of the motor shaft (73) is provided in the reducer case (72) and protrudes into the recessed portion (62a) of the wheel (62) while extending at a lateral side of the knuckle (43L, 43R).

5. The electric vehicle according to any preceding claim, wherein the drive unit (54) is disposed within an outer diameter circle (87) of the tyre (65) of each of the drive wheels (13L, 13R) in the side view of the vehicle.

6. The electric vehicle according to any preceding claim, wherein the upper arm portion (48), a lower joint portion (52) connecting the lower arm (42L, 42R) to the knuckle (43L, 43R), and a shock absorber connection portion (42a) connecting the shock absorber (44L, 44R) to the lower arm (42L, 42R) are disposed within an outer diameter circle (87) of the tyre (65) in the side view of the vehicle.

7. The electric vehicle according to claim 3 or claim 4, wherein the upper arm (41L, 41R) is a V-shaped member having an intermediate portion protruding upward, and a vehicle body frame side connection portion (45) of the upper arm (41L, 41R) is lower than the joint portion (47).

## Patentansprüche

1. Elektrofahrzeug (10) mit linken und rechten Antriebsrädern (13L, 13R), wobei jedes Antriebsrad einen Reifen (65) aufweist, in dem eine Bremseinrichtung (83) in einem ausgesparten Abschnitt (62a) eines Rads (62) von jedem der Antriebsräder (13L, 13R) bereitgestellt ist und wobei das Rad (62) von jedem der Antriebsräder (13L, 13R) mittels einer Antriebseinheit (54) angetrieben ist, wobei
ein vertikal schwenkbarer oberer Arm (41L, 41R) und ein vertikal schwenkbarer unterer Arm (42L, 42R) sich von einem Fahrzeugkarosserierahmen (11) des Elektrofahrzeugs (10) in eine laterale Richtung des Fahrzeugs erstrecken, wobei ein Achsschenkel (43L, 43R) mit einem distalen Ende des oberen Arms (41L, 41R) und einem distalen Ende des unteren Arms (42L, 42R) verbunden ist, wobei das Rad (62) rotierbar von dem Achsschenkel (43L, 43R) gestützt ist, wobei die Antriebseinheit (54) mit der Seite des Achsschenkels (43L, 43R) näher dem lateralen Zentrum des Fahrzeug verbunden ist, und ein Stoßdämpfer (44L, 44R) sich zwischen dem Fahrzeugkarosserierahmen (11) und dem unteren Arm (42L, 42R) erstreckt,
wobei die Antriebseinheit (54) eine Einheit ist, in der ein Elektromotor (67) und ein Getriebe (68) integriert sind,
wobei sich ein oberer Armabschnitt (48) schräg nach oben in Richtung auf eine Rückseite des Fahrzeugs von dem Achsschenkel (43L, 43R) zwischen dem Rad (62) und der Antriebseinheit (54) zu einer Position erstreckt, wo der obere Armabschnitt (48), in einer Seitenansicht des Fahrzeugs, nicht mit der Antriebseinheit (54) überlappt, wobei der obere Armabschnitt (41L, 41R) mit einem oberen Ende des oberen Armabschnitts (48) verbunden ist, und der Stoßdämpfer (44L, 44R) an der Rückseite des oberen Arms (41L, 41R) angeordnet ist, und
der Stoßdämpfer (44L, 44R) dadurch angeordnet ist, um die Antriebseinheit (54) in einer Frontalansicht des Fahrzeugs zu überlappen;
wobei der Elektromotor (67) lateral an einer Seite des Reifens (65) lokalisiert ist, und wobei die Antriebseinheit (54) oberhalb des Drehpunkts des Rads (62) lokalisiert ist und innerhalb eines äußeren Durchmesserkreises (87) des Reifens (65) angeordnet ist, sodass die Antriebseinheit (54) in einer Seitenansicht des Fahrzeugs (10) nicht gesehen werden kann.

2. Elektrofahrzeug nach Anspruch 1, wobei eine Linie (90), die sich, in der Seitenansicht des Fahrzeugs, nach oben von einem Drehpunkt des Rads (62) erstreckt, und der Elektromotor (67) auf eine derartige Weise angeordnet sind, dass eine Motorwelle (73) des Elektromotors (67) die Linie (90) überlappt.

3. Elektrofahrzeug nach Anspruch 1 oder Anspruch 2, wobei
die Antriebseinheit (54) durch Anbringen des Elektromotors (67) an einer Oberfläche eines Mittelgehäuses (66) und durch Anbringen des Getriebes (68) an einer anderen Oberfläche des Mittelgehäuses (66) gebildet wird, und
in der Seitenansicht des Fahrzeugs eine obere Hälfte eines Motorgehäuses (49) eine halbkreisförmige Form aufweist und mindestens einen Teil eines Gelenkabschnitts (47), an dem das distale Ende des oberen Arms (41L, 41R) mit dem oberen Armabschnitt (48) verbunden ist, in einem annährend dreieckigen Raum (91), der von dem Halbkreis umgeben ist, wobei eine horizontale Linie (88) durch den obersten Punkt des Halbkreises läuft und eine vertikale Linie (89) durch den hintersten Punkt des Halbkreises läuft.

4. Elektrofahrzeug nach Anspruch 3, wobei
in der Frontalansicht des Fahrzeugs das Getriebe (68) auf einer Seite näher an dem Rad (62) angeordnet ist, der Elektromotor (67) auf einer Seite näher zu der Mitte des Fahrzeugs angeordnet ist, wobei die Motorwelle (73) rotierbar an einem Ende durch das Motorgehäuse (49) gestützt ist, und rotierbar an einem anderen Ende durch ein Getriebegehäuse (72) gestützt ist, und
ein Lagerstützabschnitt (85), der das andere Ende der Motorwelle (73) stützt, in dem Getriebegehäuse (72) bereitgestellt ist und in den ausgesparten Abschnitt (62a) des Rads (62) ragt, während er sich an einer lateralen Seite des Achsschenkels (43L, 43R) erstreckt.

5. Elektrofahrzeug nach einem der vorstehenden Ansprüche, wobei die Antriebseinheit (54), in der Seitenansicht des Fahrzeugs, innerhalb eines äußeren Durchmesserkreises (87) des Reifens (65) von jedem der Antriebsräder (13L, 13R) angeordnet ist.

6. Elektrofahrzeug nach einem der vorstehenden Ansprüche, wobei der obere Armabschnitt (48), ein unterer Gelenkabschnitt (52), der den unteren Arm (42L, 42R) mit dem Achsschenkel (43L, 43R) verbindet, und ein Stoßdämpferverbindungsabschnitt (42a), der den Stoßdämpfer (44L, 44R) mit dem unteren Arm (42L, 42R) verbindet, in einer Seitenansicht des Fahrzeugs innerhalb eines äußeren Durchmesserkreises (87) des Reifens (65) angeordnet sind.

7. Elektrofahrzeug nach Anspruch 3 oder Anspruch 4, wobei der obere Arm (41L, 41R) ein V-förmiges Element ist, das einen Zwischenabschnitt aufweist, der nach oben ragt, und wobei ein Fahrzeugkarosserierahmen-Seitenverbindungsabschnitt (45) des oberen Arms (41L, 41R) niedriger als der Gelenkabschnitt (47) ist.

## Revendications

1. Véhicule électrique (10) avec des roues d'entraînement gauche et droite (13L, 13R), chaque roue d'entraînement présentant un pneu (65), dans lequel un dispositif de freinage (83) est prévu dans une portion évidée (62a) d'une roue (62) de chacune des roues d'entraînement (13L, 13R) et la roue (62) de chacune des roues d'entraînement (13L, 13R) est entraînée par une unité d'entraînement (54), dans lequel
un bras supérieur pouvant osciller verticalement (41L, 41R) et un bras inférieur pouvant osciller verticalement (42L, 42R) s'étendent depuis un cadre de corps de véhicule (11) du véhicule électrique (10) dans une direction latérale du véhicule, une articulation (43L, 43R) est raccordée à une extrémité distale du bras supérieur (41L, 41R) et à une extrémité distale du bras inférieur (42L, 42R), la roue (62) est supportée de manière à pouvoir tourner par l'articulation (43L, 43R), l'unité d'entraînement (54) est raccordée au côté de l'articulation (43L, 43R) plus près du centre latéral du véhicule, et un absorbeur de chocs (44L, 44R) s'étend entre le cadre de corps de véhicule (11) et le bras inférieur (42L, 42R),
l'unité d'entraînement (54) est une unité dans laquelle un moteur électrique (67) et un réducteur (68) sont intégrés,
une portion de bras supérieur (48) s'étend en oblique vers le haut vers un arrière du véhicule depuis l'articulation (43L, 43R) entre la roue (62) et l'unité d'entraînement (54) dans une position où la portion de bras supérieur (48) ne recouvre pas l'unité d'entraînement (54) dans une vue de côté du véhicule, le bras supérieur (41L, 41R) est raccordé à une extrémité supérieure de la portion de bras supérieur (48), et l'absorbeur de chocs (44L, 44R) est disposé à l'arrière du bras supérieur (41L, 41R), et
l'absorbeur de chocs (44L, 44R) est disposé ainsi pour recouvrir l'unité d'entraînement (54) dans une vue de face du véhicule ;
dans lequel le moteur électrique (67) est situé latéralement sur un côté du pneu (65), et l'unité d'entraînement (54) est située au-dessus du centre de rotation de la roue (62) et est disposée dans un cercle de diamètre extérieur (87) du pneu (65) de sorte que l'unité d'entraînement (54) ne puisse pas être vue dans une vue de côté du véhicule (10).

2. Véhicule électrique selon la revendication 1, dans lequel une ligne (90) s'étendant vers le haut depuis un centre de rotation de la roue (62) dans la vue de côté du véhicule et le moteur électrique (67) sont disposés de manière qu'un arbre de moteur (73) du moteur électrique (67) recouvre la ligne (90).

3. Véhicule électrique selon la revendication 1 ou la revendication 2, dans lequel
l'unité d'entraînement (54) est formée par attache du moteur électrique (67) à une surface d'un carter central (66) et par attache du réducteur (68) à l'autre surface du carter central (66), et
dans la vue de côté du véhicule, une moitié supérieure d'un carter de moteur (49) présente une forme de demi-cercle et au moins une partie d'une portion de joint (47) où l'extrémité distale du bras supérieur (41L, 41R) est raccordée à la portion de bras supérieur (48) est disposée dans un espace presque triangulaire (91) entouré par le demi-cercle, une ligne horizontale (88) passant au travers du point le plus haut du demi-cercle, et une ligne verticale (89) passant au travers du point le plus en arrière du demi-cercle.

4. Véhicule électrique selon la revendication 3, dans lequel
dans la vue de face du véhicule, le réducteur (68) est disposé sur un côté plus près de la roue (62), le moteur électrique (67) est disposé sur un côté plus près du centre du véhicule, l'arbre de moteur (73) est supporté de manière à pouvoir tourner à une extrémité par le carter de moteur (49), et est supporté de manière à pouvoir tourner à une autre extrémité par un carter de réducteur (72), et
une portion de support de palier (85) supportant l'autre extrémité de l'arbre de moteur (73) est prévue dans le carter de réducteur (72) et fait saillie dans la portion évidée (62a) de la roue (62) tout en s'étendant sur un côté latéral de l'articulation (43L, 43R).

5. Véhicule électrique selon une quelconque revendication précédente, dans lequel l'unité d'entraînement (54) est disposée dans un cercle de diamètre extérieur (87) du pneu (65) de chacune des roues d'entraînement (13L, 13R) dans la vue de côté du véhicule.

6. Véhicule électrique selon une quelconque revendication précédente, dans lequel la portion de bras supérieur (48), une portion de joint inférieur (52) raccordant le bras inférieur (42L, 42R) à l'articulation (43L, 43R), et une portion de raccordement d'absorbeur de chocs (42a) raccordant l'absorbeur de chocs (44L, 44R) au bras inférieur (42L, 42R) sont disposées dans un cercle de diamètre extérieur (87) du pneu (65) dans la vue de côté du véhicule.

7. Véhicule électrique selon la revendication 3 ou la revendication 4, dans lequel le bras supérieur (41L, 41R) est un élément en forme de V présentant une portion intermédiaire faisant saillie vers le haut, et une portion de raccordement latérale de cadre de corps de véhicule (45) du bras supérieur (41L, 41R) est inférieure à la portion de joint (47).
